# EUROPEAN PATENT SPECIFICATION

(11) **EP 2 995 542 B1**
(45) Date of publication and mention of the grant of the patent: **10.05.2017**
(21) Application number: 15174137.8
(22) Date of filing: 26.06.2015
(51) Int. Cl.: B62K 11/00, F02M 35/02

(54) **MOTORCYCLE**
MOTORRAD
MOTOCYCLETTE

(30) Priority: 12.09.2014 JP 2014187011
(43) Date of publication of application: 16.03.2016
(73) Proprietor: Honda Motor Co., Ltd., Tokyo 107-8556 (JP)
(72) Inventor: NISHIMURA, Shin, Wako-shi Saitama 351-0193 (JP); NOUMURA, Takeshi, Wako-shi Saitama 351-0193 (JP); FUKUYOSHI, Yasuhiro, Wako-shi Saitama 351-0193 (JP)
(74) Representative: Stevens, Jason Paul

(56) References cited:
- CN-A- 103 994 175
- CN-U- 202 832 831
- JP-A- 2005 105 988

## Description

The present invention relates to an improvement in a motorcycle provided with an air cleaner unit.

A motorcycle with an air cleaner unit for purifying air and introducing the purified air to an engine is known (see, for example, see FIGS. 1 to 3 of Japanese Patent Application Laid-Open Publication No. 2005-105988).

As shown in FIGS. 1 to 3 of JP 2005-105988, an air introducing passage (30) is arranged on the outside of a main frame (5) (the numbers in parentheses correspond to the reference numbers as used in JP 2005-105988). An air cleaner box (18) (hereinafter, referred to as "air cleaner unit (18)") is arranged on the inside of the main frame (5). A V-type engine (10) for sucking the air purified by the air cleaner unit (18) is located below the air cleaner unit (18).

Lightening holes (42) are formed in the main frame (5). Left and right air intake ducts (43) extend to the air cleaner unit (18) in such a way as to pass through the lightening holes (42). Air introducing passages (30) are configured to communicate with the air intake ducts (43). The air passes through the air introducing passages (30) and enters the air cleaner unit (18) through the left and right air intake ducts (43). After being purified by the air cleaner unit (18), the air flows into the engine (10).

In order to reduce the weight of the air cleaner unit described above, it is possible to form the air cleaner unit from a relatively light material, in particular carbon fibre. In the case of an air cleaner unit made from carbon fibre, it may be necessary to provide a reinforcing rib for reducing or suppressing noise and vibration. However, forming a rib structure in the carbon fibre may take a lot of time, and thereby cause an increase in cost. As a countermeasure against the above, it is possible to reduce or decrease air intake noise and vibration by increasing the thickness of a layer of carbon fibre. However, there is then a problem that the capacity of the air cleaner unit is decreased as a result of the increase in thickness of the layer of carbon fibre.

CN 202832831 discloses an automobile engine timing cover, formed from a number of layers, some of which are carbon fibre, and some of which are described as being "mixed material" made of butyl rubber and water-absorbing polymer absorbents.

CN 103994175 discloses an automobile transmission shaft, in which a layer of rubber is coated onto the inner wall of a shaft pipe formed from carbon fibre to reduce noise.

It is desired to provide a technique which is capable of reducing or decreasing air intake noise and vibration and also ensuring the capacity of the air cleaner unit.

The present invention has been made in consideration of the above described circumstances, and it is an object of at least the preferred embodiment to provide a technique which is capable of reducing or decreasing air intake noise and vibration caused from an air cleaner unit and also of ensuring a capacity of the air cleaner unit.

According to a first aspect of the present invention, there is provided a motorcycle in which carbon fibre is used to form an air cleaner unit, and outside air is introduced through the air cleaner unit into an engine, characterized in that a lamination layer part formed by laminating plural kinds of materials is used to form a region of at least a portion of the air cleaner unit, and the lamination layer part is formed of a carbon fibre layer and an elastic material layer; wherein each of the carbon fibre layer and the elastic material layer is provided in multiple layers in the lamination layer part, and the lamination layer part comprises a first lamination layer part and a second lamination layer part in which the elastic material layer is thicker than that of the first lamination layer part; and wherein the air cleaner unit includes an air intake duct for introducing the outside air and a casing body provided with an opening to be connected to the air intake duct, and the second lamination layer part is used to form the region around the opening.

According to this aspect, the lamination layer part is formed from a carbon fibre layer and an elastic material layer. Since the air intake noise and the like are effectively absorbed by the elastic material layer, the thickness of the air cleaner unit can be reduced, and due to the reduction in thickness, a capacity of the air cleaner unit can be ensured sufficiently. In addition, the air intake noise and vibration produced in the air cleaner unit can be reduced or decreased.

Further, since the lamination layer part is provided with multiple elastic material layers, the air intake noises transmitted to the lamination layer part can be more effectively reduced than when a lamination layer part with a single layer of elastic material layer is used.

In addition, a swirl of an air stream due to the air intake is easily caused in and around the opening of the air cleaner unit into which the outside air is introduced. Since the second lamination layer part (which has a thicker elastic material layer than the first lamination layer part) is arranged around the opening, which is subject to the influence of the swirls of the air stream due to the air intake, it is possible to reduce or decrease the air intake noise and the vibration caused in the air cleaner unit.

In a further preferred form, the engine is a V-type engine, and includes cylinder sections arranged in front of and to the rear of the casing body, and a pair of left and right vehicle body frames is located on left and right lateral sides of the casing body, wherein the first lamination layer part is arranged on a surface of the casing body facing the cylinder sections, and the second lamination layer part is arranged in at least a part of an upper surface of the casing body.

Thus, the second lamination layer part is used to form at least a part of the upper surface of the casing body. Since the rider is located above the upper surface of the casing body, less air intake noise and vibration is transmitted from the casing body toward the rider, thus enhancing the silence of the air cleaner unit.

Preferably, the upper surface of the casing body is formed with a recess portion for accommodating a battery, and the recess portion is formed in the first lamination layer part, wherein a cushioning material is arranged between the first lamination layer part and the battery, and the battery is mounted on the upper surface of the casing body by fastening a battery cover for covering the battery.

By providing the cushioning material in this way, the recess portion in which the battery is accommodated can be formed from the first lamination layer part (with a thinner elastic material layer than the second lamination layer part). As a result, due to the cushioning material and the first lamination layer part, the air intake noise and vibration caused in the air cleaner unit can be reduced or decreased, while still reducing the cost for the air cleaner unit.

A preferred embodiment of the invention will now be described by way of example only and with reference to the accompanying drawings, in which:
FIG. 1 is a right side view of a motorcycle in accordance with an embodiment of the present invention;
FIG. 2 is an enlarged view of a part of the motorcycle showing an air cleaner unit and the surrounding area thereof;
FIG. 3 is a plan view of the air cleaner unit and the surrounding area thereof taken along arrow 3 in FIG 2;
FIG. 4 is a perspective view showing a structure of the air cleaner unit;
FIG. 5 is a cross-sectional view showing the structure of the air cleaner unit, taken along line 5-5 in FIG. 3;
FIG. 6 is a front view of the air cleaner unit and the surrounding area thereof;
FIG. 7 is a perspective view showing a lamination layer part of the air cleaner unit;
FIG. 8 is a cross-sectional view of a first lamination layer part;
FIG. 9 is a cross-sectional view of a second lamination layer part; and
FIG. 10 is a cross-sectional view taken along line 10-10 in FIG. 3.

Hereinafter, a presently preferred embodiment of the present invention will be described in detail. In the drawings and the embodiment, terms such as "front", "rear", "top", "bottom", "left" and "right" should be interpreted from the viewpoint of a rider riding on the motorcycle.

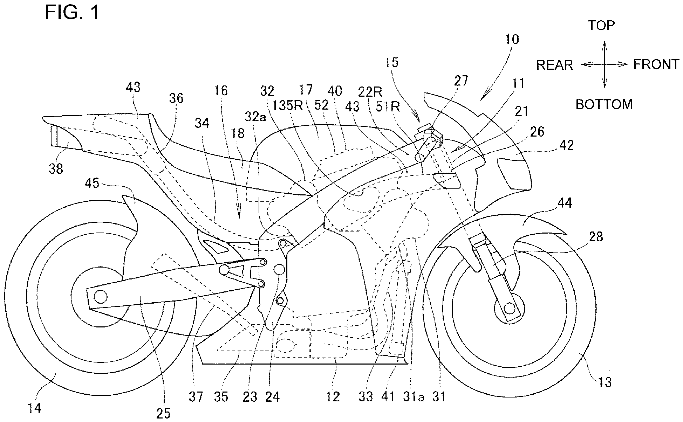

As shown in FIG. 1, a motorcycle 10 is a straddle-type vehicle and includes a vehicle body frame 11, an engine 12 as a power source mounted on the vehicle body frame 11, a front wheel steering section 15 steerably supporting a front wheel 13 which is located forwardly of the engine 12 at a front part of the vehicle body frame 11, a rear wheel suspension section 16 swingably supporting a rear wheel 14 which is located at a rear part of the vehicle body frame 11, a fuel tank 17 disposed above the engine 12 and mounted on the vehicle body frame 11, and a rider's seat 18 on which the rider rides in a straddling fashion, disposed at the rear of the fuel tank 17 and mounted on the vehicle body frame 11.

The vehicle body frame includes, as the main components, a head pipe 21, a pair of left and right main frames 22 extending rearwardly from the head pipe 21, and a pair of pivot frames 24 which extends downwardly from rear ends of the main frames 22 and supports a pivot shaft 23 functioning as a support shaft of the rear wheel suspension section 16.

The rear wheel suspension section 16 has a swing arm 25 which extends rearwardly from the pivot shaft 23 and supports the rear wheel 14 at the rear end thereof. The front wheel steering section 15 includes a steering shaft 26 which is inserted into the head pipe 21 and functions as a rotation axis, a steering handlebar 27 mounted on an upper end of the steering shaft 26, and a front fork 28 which is integrally provided with the steering shaft 26 and extends downwardly and forwardly so as to carry the front wheel 13.

The engine 12 to be mounted on the vehicle body frame 11 is a so-called V-type engine having a forwardly inclined front cylinder 31 and a rearwardly inclined rear cylinder 32. A front cylinder exhaust pipe 33 is connected to an exhaust port 31 a of the front cylinder 31. The front cylinder exhaust pipe 33 first extends toward the front of the vehicle, and then curves toward the rear of the vehicle. A rear end of the front cylinder exhaust pipe 33 is connected to a chamber 35 in which a catalyser device is accommodated, and a muffler 37 extends from this chamber 35 toward the rear of the vehicle. The rear cylinder 32 is formed of a plurality of cylinders (here, two cylinders) which are arranged side by side in the lateral direction of the vehicle, and rear cylinder exhaust pipes 34 for leading exhaust gas are connected to exhaust ports 32a of the rear cylinder 32. The rear cylinder exhaust pipes 34 extend toward the rear of the vehicle and are connected to a second muffler 38 via a second chamber 36 in which a catalyser device is accommodated. An air cleaner unit 40 is arranged above the engine 12 in a space formed between the front cylinder 31 and the rear cylinder 32. The cylinder sections (the front cylinder 31 and the rear cylinder 33) of the engine 12 are thus arranged in front of and behind a casing body 53 of the air cleaner unit 40.

A radiator unit 41 is arranged behind the front wheel 13 and in front of the engine 12. A front part of the vehicle body is covered with a cowling 42, and the lateral side of the vehicle are covered with a vehicle body cover 43. A front fender 44 is mounted on the front fork 28 in such a way as to cover an upper side of the front wheel 13.

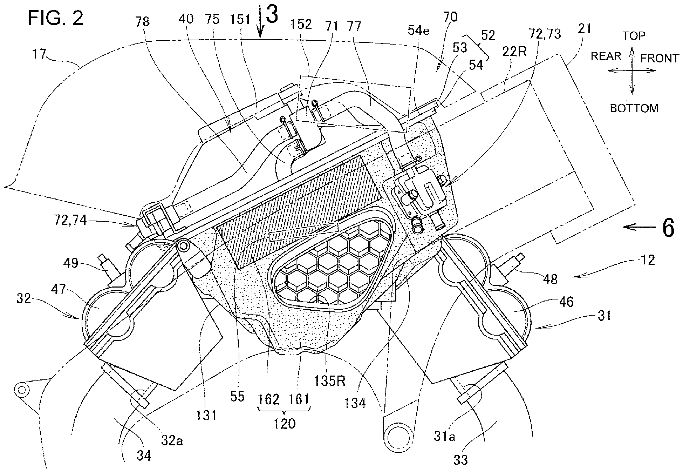

As shown in FIG. 2, an upper end of the front cylinder 31 of the engine 12 is covered with a front head cover 46, and a front ignition device 48 is installed in the front head cover 46. Similarly, an upper end of the rear cylinder 32 is covered with a rear head cover 47, and a rear ignition device 49 is installed in the rear head cover 47.

The front cylinder 31 is formed of a plurality of cylinders which are arranged side by side in the lateral direction of the vehicle, and the front cylinder exhaust pipes 33 for leading the exhaust gas are connected to the exhaust ports 31 a of the front cylinder 31. The rear cylinder 32 is formed of the plurality of cylinders which are arranged side by side in the lateral direction of the vehicle, and the rear cylinder exhaust pipes 34 for leading the exhaust gas are connected to the exhaust ports 32a of the rear cylinder 32. The engine 12 is thus a V4 type engine, formed of two front cylinders and two rear cylinders.

The air cleaner unit 40 is arranged above the engine 12 between the front cylinder 31 and the rear cylinder 32. The fuel tank 17 extends from the upper side of the air cleaner unit 40 towards the rear of the vehicle in such a way as to cover the air cleaner unit 40.

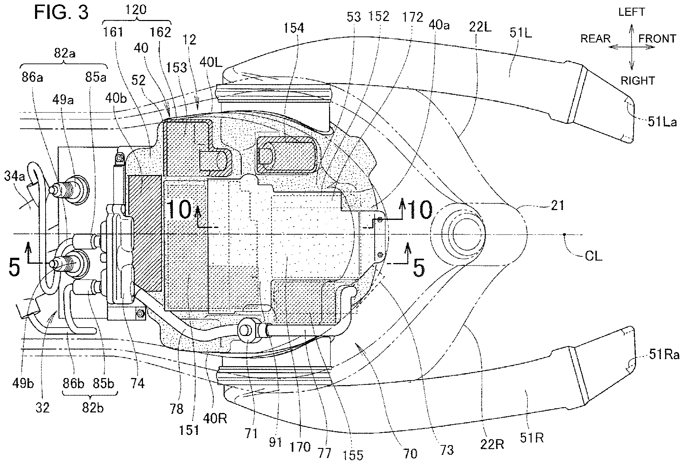

As shown in FIG. 3, the engine 12 and the air cleaner unit 40 are arranged between the pair of main frames 22L, 22R. Thus, the left and right main frames 22L, 22R are located on left and right sides of the casing body 52 of the air cleaner unit 40. Air intake ducts 51 L, 51 R for introducing air into the air cleaner unit 40 are connected to lateral surfaces 40L, 40R of the air cleaner unit 40. Air inlets 51 La, 51 Ra are provided at each front end of the air intake ducts 51 L, 51 R. Each of the air intake ducts 51 L, 51 R passes through lightening holes formed in the left and right main frames 22L, 22R.

The structure of the air cleaner unit will now be described.

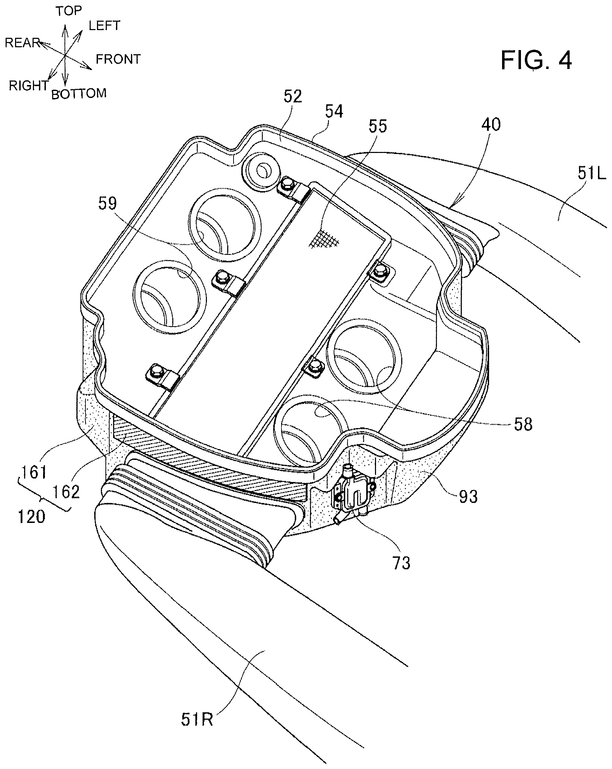

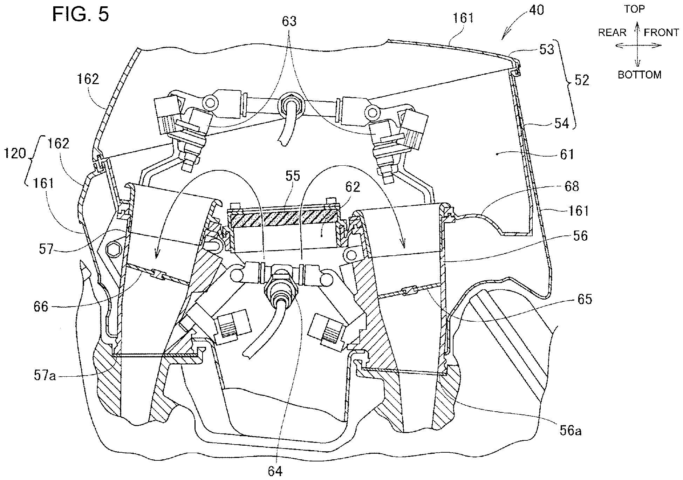

As shown in FIGS. 4 and 5, the air cleaner unit 40 has a casing body 52 and a filter element 55 which is provided in an interior of the casing body 52, such that air passing therethrough is purified. The casing body 52 is formed of an upper half body 53 and a lower half body 54 which are joined together in a vertical direction. Front and rear funnel holes 58, 59 are provided in front of and at the rear of the elements 55, and a front funnel 56 and a rear funnel 57 for supplying the purified air to the front cylinder 31 and the rear cylinder 32 are inserted into and attached to these front and rear funnel holes 58, 59.

The casing body 52 is partitioned into a clean side 61 and a dirty side 62 by the element 55 and a partition wall 68. The clean side 61 is formed in an upper part of the casing body 52 and the dirty side 62 is formed in a lower part of the casing body 52. A first fuel injection nozzle 63 for feeding atomized fuel is located in the interior of the casing body 52 and faces each inlet of the front and rear funnels 56, 57. A second fuel injection nozzle 64 is located downstream of the first fuel injection nozzle 63. Throttle valves 65, 66 are provided in axially intermediate positions of the front and rear funnels 56, 57 and between the first fuel injection nozzle 63 and the second fuel injection nozzle 64. A front seal member 56a for preventing a leak of the intake air is interposed between the front cylinder 31 of the engine 12 (see FIG. 2) and the front funnel 56, while a rear seal member 57a for preventing a leak of the intake air is interposed between the rear cylinder 32 and the rear funnel 57.

Air is introduced by the air intake ducts 51 L, 51 R from lateral sides of the air cleaner unit 40 into the dirty side 62, which forms a lower half of the air cleaner unit 40, is then filtered by the element 55, and flows into the clean side 61 which forms an upper half of the air cleaner unit 40. The air then flows from the front and rear funnels 56, 57 which are arranged to face into the clean side 61, to an intake side of the engine 12 (see FIG. 2).

A secondary air supply device, etc. for purifying the exhaust gas by burning a combustible component will now be described.

Referring again to FIGS. 2 and 3, the secondary air supply device 70 includes an electromagnetic valve 71 for supplying or intercepting the purified air within the air cleaner to an exhaust system, and a reed valve 72 which can be opened and closed by a negative pressure of an exhaust channel (the exhaust port 31a, 32a) of the engine 12 which is provided downstream of the electromagnetic valve 71. The reed valve 72 includes a front reed valve 73 and a rear reed valve 74. The front reed valve 73 is arranged at a front part 40a of the air cleaner unit 40, while the rear reed valve 74 is arranged at a rear part 40b of the air cleaner unit 40.

A connecting pipe conduit 75 for supplying purified air from the air cleaner unit 40 to the electromagnetic valve 71 provides a connection between the air cleaner unit 40 and the electromagnetic valve 71. An upstream front pipe conduit 77 provides a connection between the electromagnetic valve 71 and the front reed valve 73, and an upstream rear pipe conduit 78 provides a connection between the electromagnetic valve 71 and the rear reed valve 74.

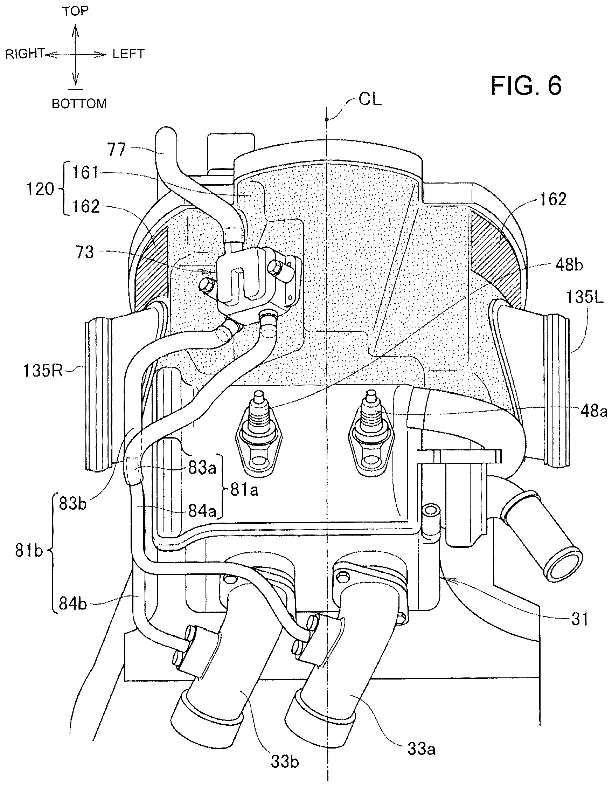

As shown in FIG. 6, front pipe conduit members 81a, 81b extend from the front reed valve 73, and each distal end of the front pipe conduit members 81 a, 81 b is connected to an exhaust channel (the front cylinder exhaust pipes 33a, 33b). Referring again to FIG. 3, rear pipe conduit members 82a, 82b extend from the rear reed valve 74, and each distal end of the rear pipe conduit members 82a, 82b is connected to an exhaust channel (the rear cylinder exhaust pipes 34). The rear pipe conduit member 82 provides a connection between the rear reed valve 74 and the rear cylinder exhaust pipe 34. Thus, the reed valve 72 is located at a position facing the exhaust channel, between the air cleaner unit 40 and the exhaust channel of the engine 12.

As mentioned above, the reed valve 72 is comprised of the front reed valve 73 and the rear reed valve 74. The front reed valve 73 is used for the front cylinder 31 while the rear reed valve 74 is used for the rear cylinder 32, in such a manner that the secondary air is supplied from the air cleaner unit 40 to the exhaust channel of the engine 12.

Referring to FIGS. 1 and 6, the front cylinder exhaust pipe 33 initially extends forwardly, and thereafter is curved so as to be directed towards the rear side of the vehicle while being located on the right of the vehicle, and the front reed valve 73 is also arranged so as to lie on the right of the vehicle, similar to the direction of the front cylinder exhaust pipe 33. The front reed valve 73 and the front cylinder exhaust pipes 33a, 33b are connected each by the front pipe conduit members 81 a, 81 b. In the drawing, a reference character CL designates a lateral centreline of the vehicle. It should be noted that although the front cylinder exhaust pipe and the front reed valve are arranged on the right of vehicle in this embodiment, they may be arranged on the left of the vehicle.

The front pipe conduit members 81 a, 81 b are comprised of front tubes 83a, 83b, which are made of an elastic material such as a rubber tube or the like having low thermal conductivity and extend from the front reed valve 73, and front tubes 84a, 84b, which are made of metal and extend from each distal end of the front tubes 83a, 83b of the elastic material to be connected to the front cylinder exhaust pipes 33a, 33b. Since the part of each the front pipe conduit member 81 a, 81 b connected to the front reed valve 73 is formed of elastic material, the thermal effect on the front reed valve 73 due to thermal conduction from the front cylinder exhaust pipes 33a, 33b can be reduced. In addition, this makes it harder for vibrations from the front cylinder exhaust pipes 33a, 33b to be transmitted to the front reed valve 73, which is also advantageous.

The front reed valve 73 and the front cylinder exhaust pipes 33a, 33b are both arranged on the right of vehicle and connected by the front pipe conduit members 81 a, 81b. Therefore, the lengths of the front pipe conduit members 81 a, 81 b which provide a connection between the front reed valve 73 and each of the front cylinder exhaust pipes 33a, 33b can be reduced. In addition, since the front pipe conduit members 81 a, 81 b can be checked from the lateral outside of the vehicle, it is possible to improve the maintainability.

Referring again to FIG. 3, the rear pipe conduit members 82a, 82b which provide a connection between the rear reed valve 74 and each of the rear cylinder exhaust pipes 34a, 34b are located at lateral sides of rear ignition devices 49a, 49b and extend longitudinally.

The rear pipe conduit member 82 is comprised of rear tubes 85a, 85b, each of which is made of an elastic material such as a rubber tube or the like having low thermal conductivity and extends from the rear reed valve 74, and rear tubes 85a, 85b, which are made of metal and extend from each distal end of the rear tubes 85a, 85b of the elastic material to thereby be connected to each of the rear cylinder exhaust pipes 34a, 34b. Since the part of each of the rear pipe conduit members 82a, 82b connected to the rear reed valve 74 is formed of elastic material, the thermal effect on the rear reed valve 74 due to thermal conduction from the rear cylinder exhaust pipes 34a, 34b can be reduced. In addition, this makes it harder for vibrations from the rear cylinder exhaust pipes 34a, 34b to be transmitted to the rear reed valve 74, which is also advantageous.

Referring again to FIG. 2, the front reed valve 73 is arranged on the lower half body 54 of the casing body 52. The front reed valve 73 and the rear reed valve 74 are located at substantially the same height. The pair of main frames 22 and the front reed valve 73 are arranged so as to overlap with each other in a side view of the vehicle.

The casing body 52 is vertically divided into an upper half body 53 and a lower half body 54, and dividing surfaces 54e of the casing body 52 are inclined downwardly and rearwardly relative to a horizontal plane in the longitudinal direction of the vehicle. Moreover, the front reed valve 73 and the rear reed valve 74 are arranged on the casing body 52 at substantially the same height.

Although the dividing surfaces 54e of the casing body 52 are arranged to be inclined, the front reed valve 73 and the rear reed valve 74 are arranged on the casing body 52 at substantially the same height. Therefore, the vertical extent of the casing main body 53 can reduced, and the weight distribution thereof can be optimized.

As shown in FIGS. 1 and 3, the rear cylinder exhaust pipes 34a, 34b are offset to the right of the vehicle and extend rearwardly. The rear reed valve 74 is also arranged to be offset towards the right of the vehicle, identical with the direction of the rear cylinder exhaust pipe 34.

The rear cylinder exhaust pipes 34a, 34b and the rear reed valve 74 are both arranged to be offset to the right of the vehicle (the same lateral side of the vehicle). Therefore, the piping of the rear pipe conduit members 82a, 82b for connecting the rear reed valve 74 and each of the rear cylinder exhaust pipes 34a, 34b can be simplified.

The casing body of the air cleaner unit is formed with a lamination layer structure using carbon fibre, as will now be described in detail.

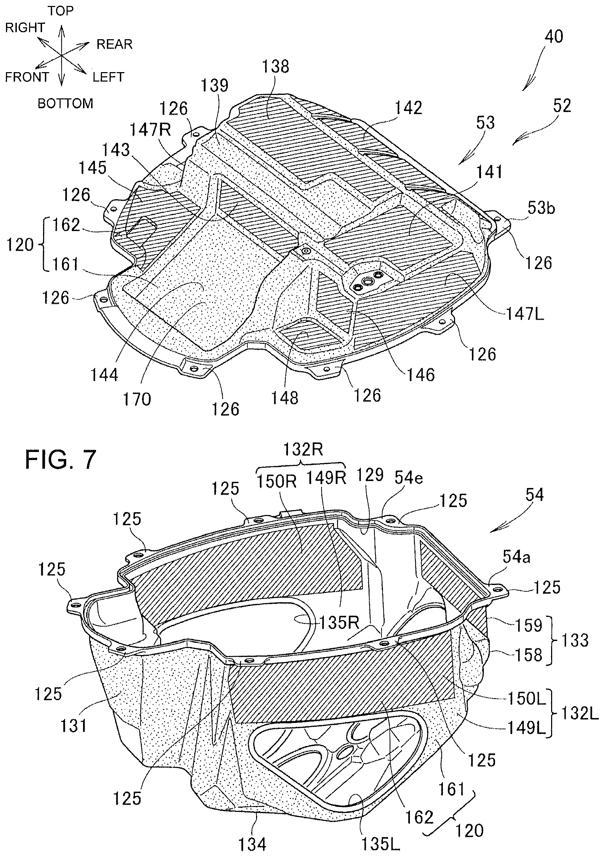

As shown in FIG. 7, the casing body 52 of the air cleaner unit 40 is formed of the lower half body 54 and the upper half body 53, which is configured to be joined to the lower half body 53 from above. Upper flanges 126 formed at a lower end 53b of the upper half body 53 are placed in alignment with lower flanges 125 formed at an upper end 54a of the upper half body 54 so as to be fastened together, and when fastened, the casing body 52 is formed.

The lower half body 54 has an opening portion 129 to be closed by the upwardly open upper half body 53. Around the circumference of this opening portion 129, the lower half body 54 is formed with a lower front wall section 131, left and right lower lateral wall sections 132L, 132R extending rearwardly from end portions of the lower front wall section 131, and a lower rear wall section 133 extending between the left and right lower lateral wall sections 132L, 132R. A bottom plate section 134 forming a bottom of the lower half body 54 extends between the lower front wall section 131 and the lower rear wall section 133 and between the left and right lower lateral wall sections 132L, 132R. Left and right openings 135L, 135R are provided in each of the left and right lower lateral wall sections 132L, 132R. The air intake ducts 51 L, 51 R (see FIG. 3) are able to be connected to these left and right openings 135L, 135R.

The upper half body 53 includes a first ceiling section 138, a second ceiling section 139 provided in front of the first ceiling section 138 at a position lower than the first ceiling section 138, a third ceiling section 141 provided on the left side of the first ceiling section 138 and the second ceiling section 139 at a position lower than the second ceiling section 139, a rearwardly inclined ceiling section 142 which is gently inclined rearwardly at the rear of the first ceiling section 138 and the third ceiling section 141, a first upper front wall section 143 located forwardly of the second ceiling section 139, a forwardly inclined ceiling section 144 which is gently inclined obliquely downwardly in the forward direction from a lower end of the first upper front wall section 143, a second forwardly inclined ceiling section 145 located at the right side of the forwardly inclined ceiling section 144, a second upper front wall section 146 located in front of the third ceiling section 141, a fourth ceiling section 148 which is provided forwardly of the second upper front wall section 146 at a lower position than the third ceiling section 141, a left upper lateral wall section 147L located at the left side of the second upper front wall section 146, and a right upper lateral wall section 147R located on the opposite lateral side of the left upper lateral wall section 147L.

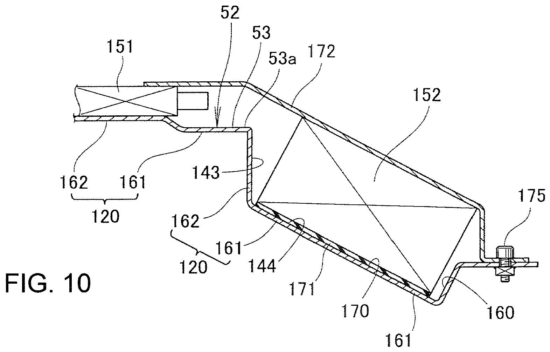

Referring also to FIG. 3, an FI unit 151 is attached to the first ceiling section 138. A battery 152 is mounted through a cushioning material 171 (see FIG. 10) on the forwardly inclined ceiling section 144 located forwardly of the first ceiling section 138. A winker switch 153 is fitted on the third ceiling section 141 located at the left side of the first ceiling section 138. A starting magneto 154 is fitted on the fourth ceiling section 148 located forwardly of the third ceiling section 141. A fuse box 155 is fitted on the second forwardly inclined ceiling section 145 located at the right side of the forwardly inclined ceiling section 144. Thus, various parts containing electric components are arranged on an upper surface of the upper half body 53.

The lamination layer part of the casing body has a lamination structure of a carbon fibre layer (CFRP) and an elastic material layer which are laminated in multiple layers. Acrylonitrile-butadiene rubber (NBR) is used as an elastic material in this embodiment, but other elastic materials may be used.

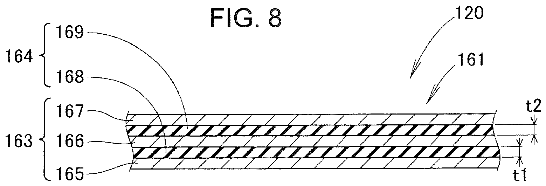

FIG. 8 shows a cross section of a first lamination layer part 161. In the first lamination layer part 161, multiple carbon fibre layers 163 and multiple elastic material layers 164 are provided. More specifically, the first lamination layer part 161 has a five-layer structure formed of a first carbon fibre layer 165, a first elastic material layer 168 which is laminated on the first carbon fibre layer 165, a second carbon fibre layer 166 which is laminated on the first elastic material layer 168, a second elastic material layer 169 which is laminated on the second carbon fibre layer 166, and a third carbon fibre layer 167 which is laminated on the second elastic material layer 169.

In this embodiment, the first elastic material layer 168 has a plate thickness (t1) of 0.2 mm and the second elastic material layer 169 has a plate thickness (t2) of 0.2 mm. Each of the plate thicknesses of the first carbon fibre layer 165, the second carbon fibre layer 166 and the third carbon fibre layer 167 are set to be 0.2 mm. The term "plate thickness" is used here with the same meaning as "thickness".

The first lamination layer part 161 formed as above is used in the regions of the upper half body 53 and the lower half body 54 indicated by multiple speckled dots in FIG. 7.

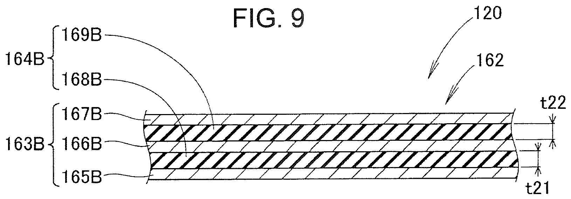

FIG. 9 shows a cross section of the second lamination layer part 162. In the second lamination layer part 162, multiple carbon fibre layers 163B and multiple elastic material layers 164B are provided. More specifically, the second lamination layer part 162 has a five-layer structure formed of a first carbon fibre layer 165B, a first elastic material layer 168B which is laminated on the first carbon fibre layer 165B, a second carbon fibre layer 166B which is laminated on the first elastic material layer 168B, a second elastic material layer 169B which is laminated on the second carbon fibre layer 166B, and a third carbon fibre layer 167B which is laminated on the second elastic material layer 169B.

In this embodiment, the first elastic material layer 168B has a plate thickness (t21) of 0.3 mm and the second elastic material layer 169B has a plate thickness (t22) of 0.3 mm. Each of the plate thicknesses of the first carbon fibre layer 165B, the second carbon fibre layer 166B and the third carbon fibre layer 167B are set to be 0.2 mm.

The second lamination layer part 162 formed as above is used in the regions of the upper half body 53 and the lower half body 54 indicated by oblique lines in FIG. 7.

A boundary region between the first lamination layer part 161 and the second lamination layer part 162 will now be described. A lower surface of the first carbon fibre layer 165 of the first lamination layer part 161 is level with a lower surface of the first carbon fibre layer 165B of the second lamination layer part 162. On the basis of the lower surface of the first carbon fibre layer 165 and the lower surface of the first carbon fibre layer 165B, the first elastic material layers 168, 168B, the second carbon fibre layers 166, 166B, the second elastic material layers 169, 169B and the third carbon fibre layers 167, 167B are laminated one on another in this order. By being laminated in this way, a difference in level is formed in a boundary region between the first lamination layer part 161 and the second lamination layer part 162. Since the difference in level in the boundary region is formed on an outer surface of the lamination layer part, this does not affect the internal capacity of the air cleaner unit.

Referring to FIGS. 3 and 7 together, in the upper half body 53, the first lamination layer part 161 is used for the forwardly inclined ceiling section 144 on which the battery 152 is fitted, and on the second ceiling section 139. Moreover, the second lamination layer part 162 is used for the first ceiling section 138 to which the FI unit 151 is attached, the third ceiling section 141 on which the winker switch 153 is fitted, the rearwardly inclined ceiling section 142 located at the rear of the first ceiling section 138 and the third ceiling section 141, the first upper front wall section 143 located in front of the second ceiling section 139, the second upper front wall section 146 located in front of the third ceiling section 141, the fourth ceiling section 148 which is located in front of the second upper front wall section 146 and on which the starting magneto 154 is fitted, and the second forwardly inclined ceiling section 145 on which the fuse box 155 is fitted.

Referring also to FIG. 2, in the lower half body 54, the first lamination layer part 161 is used for the lower front wall section 131, lower portions 149L, 149R of the left and right lower lateral wall sections 132L, 132R, a lower portion 158 of the lower rear wall section 133, and the bottom plate section 134.

With respect to the lower half body 54, the first lamination layer part 161 is arranged on each surface of the lower half body 54 facing the cylinder section (the front cylinder 31 and the rear cylinder 32). More precisely, the bottom plate section 134 located above the front cylinder 31 and the lower front wall section 131 located in front of the rear cylinder 32 are formed by the first lamination layer part 161.

Further, the second lamination layer part 162 is used for upper portions 150L, 150R of the left and right lower lateral wall sections 132L, 132R which are located above the left and right openings 135L, 135R and provided along the dividing surfaces 54e separating the lower half body 54 from the upper half body 53, and on an upper portion 159 of the lower rear wall section 133. Thus, the second lamination layer part 162 (which has a greater thickness of elastic material than the first lamination layer part 161) is arranged in the vicinity of the openings 135L, 135R and above the openings 135L, 135R.

The mounting structure of the battery mounted on the upper half body will now be described.

As shown in FIG. 10, the forwardly inclined ceiling section 144 is formed at an upper surface 53a of the upper half body 53 forming the case body 52, and the battery 152 is mounted on the forwardly inclined ceiling section 144. The upper surface 53a of the upper half body 53 has a recessed portion 170 formed by the forwardly inclined ceiling section 144, the first upper front wall section 143, and the third upper front wall section 160, and the battery 152 is accommodated in this recessed portion 170.

The recessed portion 170 is formed from the first lamination layer part 161 (see FIG. 7). The cushioning material 171 is arranged between the first lamination layer part 161 and the battery 152. The battery 152 is mounted on the upper surface 53a of the casing body 52 by fastening a battery cover 172 for covering the battery 152 by a fastening bolt 175. In this embodiment, a sponge is used for the cushioning material 171, but this is not necessary, and the material used as the cushioning material can be freely selected.

The operation and effects of the above described motorcycle will now be described.

Referring to FIGS. 2 and 7 to 9 together, the lamination layer part 120 consisting of the first lamination layer part 161 and the second lamination layer part 162 is formed of the carbon fibre layers 163 and the elastic material layers 164.

The lamination layer part 120 is formed of the carbon fibre layers 163, 163B and the elastic material layers 164, 164B. Since the elastic material layers 164, 164B are provided in addition to the carbon fibre layers 163, 163B, the thickness (plate thickness) of the lamination layer part 120 of the air cleaner unit 40 can be reduced in comparison with the case where the lamination layer part 120 is formed of only carbon fibre layers 163, 163B. Due to the reduction in the thickness of the lamination layer part 120, the capacity of the air cleaner unit 40 can be ensured sufficiently.

Further, since the lamination layer part 120 is formed of the carbon fibre layers 163, 163B and the elastic material layers 164, 164B, the air intake noise and vibration produced in the air cleaner unit 40 can be reduced or decreased.

Since the air intake noise and vibration produced in the air cleaner unit 40 can be reduced or decreased due to the provision of the lamination layer part 120, the number of reinforcing portions (such as ribs) necessary for increasing the rigidity of the air cleaner unit 40 can be reduced. This makes it possible to simplify the structure, and so the cost of the air cleaner unit 40 can be reduced.

Further, the carbon fibre layers 163, 163B and the elastic material layers 164, 164B are each provided in multiple layers in the lamination layer part 120. More specifically, the first lamination layer part 161 includes three carbon fibre layers 163 and two elastic material layers 164. In addition, the second lamination layer part 162 includes three carbon fibre layers 163B and two elastic material layers 164B.

Since the lamination layer part 120 having multiple elastic material layers 164, 164B is provided in the air cleaner unit 40, the air intake noises transmitted to the lamination layer part 120 can be more effectively reduced than with a lamination layer part having only a single elastic material layer.

Further, a swirl of an air stream due to the air intake is easily caused in and around the openings 135L, 135R of the air cleaner unit 40 into which the outside air are introduced. Moreover, the lower lateral wall sections 132L, 132R provided with the openings 135L, 135R have a larger area than other surfaces and are easily subject to the influence of the air intake noise and vibration produced in the air cleaner unit 40. Furthermore, the main frames 22L, 22R only are disposed on the lateral sides of the lower lateral wall sections 132L, 132R. In particular, since the lightening holes are provided on the lateral sides of the openings 135L, 135R, the formation of the regions in and around the openings 135L, 135R is such that the intake air is hard to be converged in comparison with other regions, and these regions are easily subject to the influence of the air intake noise and vibration.

In the preferred embodiment, since the second lamination layer part 162 (in which the elastic material layer is thicker than that of the first lamination layer part 161) is arranged around the openings 135L, 135R which are easily subject to the influence of the swirls of the air stream due to the air intake, it is possible to effectively reduce or decrease the air intake noise and vibration caused in the air cleaner unit 40.

Referring to FIGS. 8 and 10 together, the cushioning material 171 is arranged between the recessed portion 170 in which the battery 152 is accommodated and the battery 152. With this arrangement of the cushioning material 171, the recessed portion for accommodating the battery 152 can be formed from the first lamination layer part 161 (in which the elastic material layer is thinner than that of the second lamination layer part 162), and does not need to be formed from the second lamination layer part 162. As a result, due to the cushioning material 171 and the first lamination layer part 161, the air intake noise and vibration caused in the air cleaner unit 40 can be reduced or decreased while reducing the cost for the air cleaner unit 40.

Referring again to FIG. 3, the electrical components such as the battery 512, the fuse box 155, the FI unit 151 and others are arranged on the upper surface of the casing body 52. Therefore, the lengths of harnesses can be shortened in comparison with the case where the electric components are not arranged on the upper surface of the casing body 52. As a result, it is possible to decrease the weight and to reduce the vehicle cost by shortening the harnesses.

Referring to FIG. 1, the casing body 52 is arranged between the rider's seat 18 and the steering handlebar 27, and during travelling, rider's ears are located above the casing body 52. Moreover, the fuel tank 17 is configured to cover the upper surface of the casing body 52 thereby making it relatively difficult to converge the noise. Therefore, the rider may be easily subject to the influence of the noise and vibration caused in the air cleaner unit 40. However, in the preferred embodiment, since the second lamination layer part 162 is arranged in at least a part of the upper surface of the casing body 52, when the rider is located above the upper surface of the casing body 52, the air intake noise and vibration transmitted from the casing body 52 toward the rider become hard to be transmitted to the rider. Therefore, it is possible to enhance silence of the air cleaner unit 40.

Further, by utilizing an engine sound which is louder than the air intake noise, the air intake noise becomes less noticeable, and so the elastic material layers 164 located in a face to face relationship with the cylinder sections (the front cylinder 31 and the rear cylinder 32) can be reduced in thickness. Accordingly, it is possible to reduce the cost for the air cleaner unit 40.

Although a high elastic material such as nitrile rubber (NBR) is used as the elastic material in the embodiment, other high elastic materials or commonly used elastic materials may also be used.

## Claims

1. A motorcycle in which carbon fibre is used to form an air cleaner unit (40), and outside air is introduced through the air cleaner unit (40) into an engine (12), **characterized in that** a lamination layer part (120) formed by laminating plural kinds of materials is used to form a region of at least a portion of the air cleaner unit (40), and the lamination layer part (120) is formed of a carbon fibre layer (163, 163B) and an elastic material layer (164, 164B);
wherein each of the carbon fibre layer (163, 163B) and the elastic material layer (164, 164B) is provided in multiple layers in the lamination layer part (120), and the lamination layer part (120) comprises a first lamination layer part (161) and a second lamination layer part (162) in which the elastic material layer (164B) is thicker than that of the first lamination layer part (161);
and wherein the air cleaner unit (40) includes an air intake duct (51 L, 51 R) for introducing the outside air and a casing body (52) provided with an opening (135L, 135R) to be connected to the air intake duct (51 L, 51 R), and the second lamination layer part (162) is used to form the region around the opening (135L, 135R).

2. A motorcycle according to claim 1, wherein the engine (12) is a V-type engine, and includes cylinder sections (31, 32) of the engine (12) arranged in front of and to the rear of the casing body (52), and a pair of left and right vehicle body frames (22L, 22R) is located on left and right lateral sides of the casing body (52), and wherein the first lamination layer part (161) is used to form surfaces of the casing body (52) facing the cylinder sections (31, 32), and the second lamination layer part (162) is used to form at least a part of an upper surface of the casing body (52).

3. A motorcycle according to claim 1 or 2, wherein the upper surface of the casing body (52) is formed with a recess portion (170) for accommodating a battery (152), and the recess portion (170) is formed from the first lamination layer part (161), and wherein a cushioning material (171) is arranged between the first lamination layer part (161) and the battery (152), and the battery (152) is mounted on the upper surface of the casing body (52) by fastening a battery cover (172) for covering the battery (152).

## Patentansprüche

1. Ein Motorrad, worin Karbonfaser verwendet wird, um eine Luftreinigereinheit (40) zu bilden, und Außenluft durch die Luftreinigereinheit (40) in einen Motor (12) eingeleitet wird, **dadurch gekennzeichnet, dass** ein Laminierschichtteil (120) verwendet wird, der durch Laminieren mehrerer Materialarten gebildet ist, um einen Bereich von mindestens einem Abschnitt von der Luftreinigereinheit (40) zu bilden, und wobei der Laminierschichtteil (120) aus einer Karbonfaserschicht (163, 163B) und einer elastischen Materialschicht (164, 164B) gebildet ist;
wobei jede von der Karbonfaserschicht (163, 163B) und der elastischen Materialschicht (164, 164B) in mehreren Schichten in dem Laminierschichtteil (120) bereitgestellt ist und der Laminierschichtteil (120) einen ersten Laminierschichtteil (161) und einen zweiten Laminierschichtteil (162), worin die elastische Materialschicht (164B) dicker als die von dem ersten Laminierschichtteil (161) ist, umfasst;
und wobei die Luftreinigereinheit (40) eine Lufteinlassleitung (51L, 51R) zum Einleiten der Außenluft und einen Gehäusekörper (52) bereitgestellt mit einer Öffnung (135L, 135R), die mit der Lufteinlassleitung (51L, 51R) zu verbinden ist, umfasst und der zweite Laminierschichtteil (162) verwendet wird, um den Bereich um die Öffnung (135L, 135R) zu bilden.

2. Ein Motorrad nach Anspruch 1, wobei der Motor (12) ein V-Motor ist und Zylinderabschnitte (31, 32) von dem Motor (12) umfasst, die vor und hinter dem Gehäusekörper (52) angeordnet sind, und sich ein Paar von linken und rechten Fahrzeugkörperrahmen (22L, 22R) auf linken und rechten lateralen Seiten von dem Gehäusekörper (52) befinden, und wobei der erste Laminierschichtteil (161) verwendet wird, um Oberflächen von dem Gehäusekörper (52) zu bilden, die den Zylinderabschnitten (31, 32) zugewandt sind, und der zweite Laminierschichtteil (162) verwendet wird, um mindestens einen Teil von einer oberen Oberfläche von dem Gehäusekörper (52) zu bilden.

3. Ein Motorrad nach Anspruch 1 oder 2, wobei die obere Oberfläche von dem Gehäusekörper (52) mit einem Einbuchtungsabschnitt (170) zum Unterbringen einer Batterie (152) gebildet ist, und der Einbuchtungsabschnitt (170) aus dem ersten Laminierschichtteil (161) gebildet ist, und wobei ein Polsterungsmaterial (171) zwischen dem ersten Laminierschichtteil (161) und der Batterie (152) angeordnet ist, und die Batterie (152) an der oberen Oberfläche von dem Gehäusekörper (52) durch Befestigen einer Batterieabdeckung (172) zum Abdecken der Batterie (152) befestigt ist.

## Revendications

1. Motocycle dans lequel des fibres de carbone sont utilisées pour former une unité d'épuration d'air (40), et où de l'air extérieur est introduit à travers l'unité d'épuration d'air (40) dans un moteur (12), **caractérisé en ce qu'**une pièce de couches de plaquage (120) formée par placage de plusieurs types de matériaux est utilisée pour former une région d'au moins une partie de l'unité d'épuration d'air (40) et la pièce de couches de placage (120) est formée d'une couche de fibres de carbone (163, 163B) et d'une couche de matériau élastique (164, 164B) ; dans lequel chacune de la couche de fibres de carbone (163, 163B) et de la couche de matériau élastique (164, 164B) est disposée en couches multiples dans la pièce de couches de placage (120) et la pièce de couches de placage (120) comprend une première partie de couches de placage (161) et une seconde partie de couches de placage (162), dans lequel la couche de matériau élastique (164B) est plus épaisse que celle de la première partie de couches de placage (161) ;
et dans lequel l'unité d'épuration d'air (40) comprend un conduit d'admission d'air (51L, 51R) pour introduire l'air extérieur et un corps de carter (52) pourvu d'une ouverture (135L, 135R) à raccorder au conduit d'admission d'air (51L, 51R), et la seconde partie de couches de placage (162) est utilisée pour former la région autour de l'ouverture (135L, 135R).

2. Motocycle selon la revendication 1, dans lequel le moteur (12) est un moteur de type en V et comprend des sections de cylindre (31, 32) du moteur (12) agencées à l'avant et à l'arrière du corps de carter (52), et une paire de cadres de carrosserie de véhicule gauche et droit (22L, 22R) est située sur les côtés latéraux gauche et droit du corps de carter (52), et dans lequel la première partie de couches de placage (161) est utilisée pour former des surfaces du corps de carter (52) en regard des sections de cylindre (31, 32) et la seconde partie de couches de placage (162) est utilisée pour former au moins une partie de la surface supérieure du corps de carter (52).

3. Motocycle selon la revendication 1 ou 2, dans lequel la surface supérieure du corps de carter (52) est formée avec une partie en creux (170) pour recevoir une batterie (152) et la partie en creux (170) est formée de la première partie de couches de placage (161), et dans lequel un matériau d'amortissement (171) est agencé entre la première partie de couches de placage (161) et la batterie (152) tandis que la batterie (152) est montée sur la surface supérieure du corps de carter (52) par fixation d'un couvercle de batterie (172) pour recouvrir la batterie (152).
